# EUROPEAN PATENT SPECIFICATION

(11) **EP 0 947 528 B1**
(45) Date of publication and mention of the grant of the patent: **25.08.2004**
(21) Application number: 98105951.2
(22) Date of filing: 01.04.1998
(51) Int. Cl.: C08G 18/00, H01B 3/30, C08G 18/36, C08K 13/04, C08K 7/24

(54) **Polyurethane resin**
Polyurethanharz
Résine polyuréthane

(43) Date of publication of application: 06.10.1999
(73) Proprietor: MINNESOTA MINING AND MANUFACTURING COMPANY, St. Paul, Minnesota 55133-3427 (US)
(72) Inventor: Barucha, Dieter, c/o Minnesota Min. & Man. Comp., St.Paul, Minnesota 55 144-1000 (US)
(74) Representative: Wilhelm, Stefan

(56) References cited:
- EP-A- 0 366 860
- EP-A- 0 539 807
- GB-A- 2 106 526
- US-A- 5 530 057
- US-A- 5 608 028

## Description

### Field of the invention

The present invention refers to a polyurethane resin which is obtainable by reacting a first part A comprising one or more polyhydroxyl compounds and one or more fillers including low-density fillers such as hollow microspheres, with a second part B comprising one or more polyisocyanate compounds. The invention also refers to an uncured precursor of a polyurethane resin comprising said parts A and B and to an electrical cable joint comprising a mold body and an electrical splice wherein said precursor is filled into the mold and cured.

### Background of the invention

EP 0,587,003 describes a resin and a method for molding electrical cable connectors or joints. The polyol component of the precursor of said resin comprises a polyether or polyester polyol and additives and pigments. The polyol component and the polyisocyanate component of the precursor are separately stored in two portion bags of an envelope. After loosening of a separation clamp of the two portion bags, the two components can be mixed in the envelope by manual kneading and then poured into the mold.

Fillers are used in polymeric systems in general to impart certain physical or chemical properties onto the polymeric system and/or to lower the price of the polymeric system. Polyurethane resins comprising fillers are, for example, described in US 4,163,095. It is mentioned in col. 4, Ins. 5-14 of this patent that "usual auxiliary agents and additives used in the technology of casting resins may be used" such as dehydrating agents, inert fillers, plasticizers, flame retarding agents and dyes or pigments. FR 2,745,817 describes molded products, in particular, for electrical applications. A polyurethane resin comprising a polyol component, an isocyanate component and inert additives such as, for example hollow glass beads is used as casting resin.

In Kunststoffe 75 (1985), 421-424, hollow glass microspheres have been suggested as fillers for polymeric systems in order to decrease their density and/or thermal conductivity. G.T. Jones et al. point out in the 35th Annual Technical Conference Reinforced Plastic Division SPI, New Orleans, 1980, Section 1-E, that slurries of reinforced plastics based, in particular, on polyester resins and comprising hollow microspheres tend to become inhomogenous because of floating of the hollow microspheres after some hours or days. It is suggested to add solid fillers or a thixotropic additive such as Cab-O-Sil to minimize the problem but it is known that the addition of solid fillers tends to result in phase separation and the formation of precipitates which are often difficult or impossible to redisperse. Another problem is that the introduction of hollow glass microspheres into polyurethane resins, the polyol component of which being based on hydrophilic polyether polyols, tends to deteriorate the electrical properties of such resins and, in particular, increases the dielectric loss factor especially at elevated temperatures.

It was therefore an object of the invention to provide an uncured precursor of a polyurethane resin system having a first polyol part A comprising one or more polyhydroxyl compounds and one or more fillers including low-density fillers such as hollow microspheres, and a second polyisocyanate part B comprising one or more polyisocyanate compounds whereby said precursor tends to remain stable and has a favourable shelf lifetime. Another object of the present invention is to provide a polyurethane resin system which is obtainable by reacting said parts A and B and which exhibits favourable electrical properties and, in particular, advantageous values of the dielectric loss factor. Other objects of the present invention will be evident from the detailed specification below.

### Brief description of the invention

The present invention relates to a polyurethane resin which is obtainable by reacting a first polyol part A and a second polyisocyanate part B, said part A comprising 25-70 wt % of one or more polyhydroxyl compounds wherein at least 50 wt.% of said polyhydroxyl compounds are one or more hydrophobic polyhydroxyl compounds, 10-50 wt.% of one or more low-density fillers having a density of less than about 0.8 g/cm³, 10-50 wt.% of one or more high-density fillers having a density of about 2 g/cm³ or more whereby the sum of the amounts of the low-density fillers and the high-density fillers is between 20-60 wt.%, 0-10 wt.% of a suspending agent, 0-10 wt.% of a dehydrating agent wherein the percentages given refer to the mass of component A and the total mass of component A corresponds to 100 wt.%, and said component B comprising one or more polyisocyanate compounds.

The present invention also relates to an uncured precursor of the polyurethane resin according to the invention comprising said parts A and B and to an electrical cable joint comprising a mold body and an electrical splice, wherein parts A and B of the precursor are mixed and filled into the mold thereby curing to the polyurethane resin.

### Detailed description of the invention

The precursor of the polyurethane resin according to the present invention comprises a first part A which is also termed as polyol part, and a second part B which is also termed as polyisocyanate part.

The polyol part A comprises between 25-70 wt.% of one or more polyhydroxyl compounds wherein at least 50 wt.% of said polyhydroxyl compounds are one or more hydrophobic polyhydroxyl compounds. The term hydrophobic polyhydroxyl compounds relates to polyhydroxyl compounds which when mixed with polyisocyanate compounds and, optionally, dehydrating agents such as zeolites in an essentially stoichiometric ratio of isocyanate groups and hydroxyl groups to form, for example, a molded polyurethane body, essentially do not give rise to the formation of bubbles and/or foam as evaluated by visual inspection. The formation of bubbles and/or foam is caused by the reaction between isocyanate groups and water resulting in the release of carbon dioxide. Although the present inventors do not wish to be bound by such theory, it is speculated that unreacted isocyanate groups are effectively shielded from water by the hydrophobic polyhydroxyl compound or compounds whereby the formation of bubbles and/or foam is effectively suppressed.

Hydrophobic polyhydroxyl compounds which are useful in the present invention are preferably selected from the group of polyester polyhydroxyl compounds.

Especially preferred is the natural product caster oil which is primarily composed of ricinolein which is a glyceride of ricinoleic acid. A typical caster oil comprises a mixture of about 70% by weight of pure glyceryl tricinolein and about 30% by weight of glyceryl diricinolein-monoleate or monolinoleate but compositions deviating from the above are also possible. Caster oil is widely available and can be obtained, for example, from Oleo Chemie GmbH, Hamburg, Germany or York Caster Oil Co., U.S.A.

Synthetic hydrophobic polyester polyhydroxyl compounds which are preferred can be obtained, for example, by reacting low molecular weight polyols with dicarboxylic acids. Linear polymers are formed by using low molecular weight diols such as, for example, ethylene glycol, 1,3- and 1,2-propylene-glycol, 1,4-butanediol, 1,3-butanediol, 2-methylpentanediol, 1,5-pentanediol, 1,6-pentanediol and 1,12-dodecanediol. Low molecular weight polyols with functionalities greater than two give branched polyesters: Trimethylolpropane and glycerol are typically used for this purpose. The dicarboxylic acids are preferably selected from a group comprising adipic, succinic, sebacic, suberic, methyladipic, glutaric, pimelic, azelaic, thiodipropionic, citraconic and aromatic dicarboxylic acids like, for example, terephthalic and phthalic acid. Furthermore, hydrocarboxylic acids, lactones and carbonates such as, for example, ε-caprolactone and 3-hydroxybutyric acid, may be used for the preparation of hydrophobic polyester polyhydroxyl compounds.

Preferred synthetic hydrophobic polyester polyhydroxyl compounds can also be obtained by transesterfication of fats and oils which are free from hydroxyl groups with low molecular weight polyols such as trimethylol propane or glycerol, pentaerythrit or by epoxidation of unsaturated fatty acids like octadecadiene acid (linolic acid), octadecatriene acid (linolenic acid), octdecen acid (oleic acid), and subsequent hydroxylation or reaction with alcohols.

EP 0,539,807 discloses the use of novolak resins having a hydroxyl functionality of at least 3, an OH-number of at least 12 and a softening range of preferably between 75 and 150°C, as hydrophobic polyhydroxyl compounds in polyurethane resins.

Synthetic hydrophobic polyester polyhydroxyl compounds which are useful in the present invention preferably have a molecular weight of between 100 and 5,500 and, more preferably, of between 200 and 3,500. The polyester polyhydroxyl compounds preferably exhibit more than about two hydroxyl groups per average molecule, e.g., at least about 2.1 and more preferably about 2.7. The polyester polyhydroxyl compounds preferably exhibit an OH-number of about 10 or more, in particular of about 50-500.

It is essential that the polyhydroxyl compound or compounds of polyol part A comprise at least 50 wt.%, preferably at least 75 wt.% and more preferably at least 85 wt.% of one or more hydrophobic polyhydroxyl compounds. In an especially preferred embodiment hydrophobic polyhydroxyl compounds, are used exclusively. It was surprisingly found by the present inventors that a stable polyol part A of the precursor of the present invention is only obtained when the polyhydroxyl component is based on hydrophobic polyhydroxyl compounds. The polyol part A is termed as stable if when subjected to the stability test described below, it does form at most an easily redispersible precipitate and more preferably essentially no precipitate when stored at 50°C for 3 days. The term "easily redispersible" means that when gently pushing a small glass rod (diameter 3 mm) once into the precipitate which may have formed at the bottom of the test tube, such glass rod touches the bottom of the test tube. In addition to forming, at most, an easily redispersible precipitate and, more preferably, essentially no precipitate, the polyol part A of the precursor of the present invention preferably does not exhibit any liquid-liquid phase separation and/or any floating of low-density fillers such as hollow glass microspheres when stored at 50°C for 3 days according to the stability test described below. It was found that storing of the polyol part A at an elevated temperature of 50°C for 3 days allows to effectively screen polyol parts with respect to their stability, and the appearance of the polyol parts after 3 days at 50°C typically corresponds to the appearance of such polyol parts after 30 days or more at room temperature.

It was furthermore found by the present inventors that the electrical properties and, in particular, the dielectric loss factor tan δ of the cured polyurethane resin which is obtainable by reacting the polyol part A with the polyisocyanate part B, are improved when the polyhydroxyl compound or compounds of polyol component A are based on hydrophobic polyhydroxyl compounds.

The polyhydroxyl compound or compounds of polyol component A may comprise one or more hydrophilic compounds in a minor amount of less then 50 wt.%, more preferably of less than 25 wt.% and especially preferably of less than 10 wt.% with respect to the mass of the polyhydroxyl compound or compounds in order to improve, for example, the mechanical properties by formation of a segmented hard domain structure. Hydrophilic polyhydroxyl compounds which are suitable in the present invention can be selected from the group of polyether polyhydroxyl compounds. Polyether diols which are preferred can be obtained, for example, as condensation product of one or more alkylene glycols such as, for example, ethylene glycol, 1,2- or 1,3 propylene glycol, 1,4-butanediol and/or 1,5-pentanediol. Hydrophilic polyether polyhydroxy compounds which are useful in the present invention are furthermore obtained from tetrahydrofuran, ethylene oxide and/or propylene oxide.

The polyol part A of the precursor of the present invention furthermore comprises a filler component having between 10-50 wt.% of one or more low-density fillers having a density of less than about 0.8 g/cm³, and between 10-50 wt.% of one or more high-density fillers having a density of about 2 g/cm³ or more, whereby the sum of the amounts of the low-density fillers and the high-density fillers is between 20 and 60 wt.% and whereby the weight percentages given refer to the mass of polyol part A.

The low-density filler component comprises one or more fillers having a density of less than about 0.8 g/cm³. Especially preferred are hollow glass microspheres or bubbles which are commercially available, for example, from 3M Company, St. Paul, U.S.A., under the trade designation Scotchlite(TM) Glass Microspheres or Scotchcast(TM) Glass Bubbles. The terms hollow glass microbeads or microbubbles are used synonymously. The microspheres are preferably essentially spherical but deviations from the spherical shape are also possible. The glass bubbles may comprise, for example, alumosilicate(s) with small additives of other metal oxides such as K₂O, Na₂O, CaO, Fe₂O₃ or MgO, or they may comprise borosilicate(s) but other compositions are also possible. Various silica and/or silicate based low-density hollow microspheres are disclosed, for example, in the Handbook of Fillers for Plastics, ed. by H.S. Katz and J.W. Milewski, NY 1987, pp. 437-452; in particular, section 5.1 on pp. 447-450. The density of the hollow glass microspheres typically is between 0.1 - 0.7 g/cm³ and more preferably between 0.2 and 0.6 g/cm³. The average diameter of the glass beads preferably is between 30 and 500 µm and more preferably between 40 and 200 µm. Hollow glass microspheres and their preparation are described, for example, in US 3,365,315, US 3,796,777 and US 3,961,978.

Other examples of low-density fillers which are useful in the present invention, comprise, for example, hollow organic microspheres such as, for example, polyvinylidene chloride (PVDC)/ acrylonitrile (AN) microspheres which are available from KemaNord, Sundsvall, Sweden, under the trade designation Expancel. PVDC/AN hollow microspheres are also available from Pierce & Stevens Chemical Corporation, Buffalo, NY, under the trade designation Miralite. Phenolic hollow microspheres which are available, for example, from Union Carbide Corp., Danbury, CT, under the trade designation UCAR phenolic microballoons, can also be used. Inorganic hollow low-density microsphere fillers are, however, preferred. Organic hollow low-density microsphere fillers are often less preferred because of their sensitivity against temperature and/or optional additives such as, for example, plasticizers.

The high-density filler component comprises one or more fillers which are preferably selected from the group of fillers consisting of metal oxides, metal carbonates, silicon dioxide and silicates. Especially preferred are high-density fillers which are selected from the following smaller group of fillers.

| Filler | Density (g/cm3) |
|---|---|
| calcium carbonate, natural | 2.70 - 2.72 |
| dolomite | 2.85 |
| kaolin (hydrated aluminum silicate) | 2.58 - 2.63 |
| talc | 2.7 - 2.8 |
| silica | 2.1 - 2.65 |
| wollastonite | 2.9 |
| mica | 2.9 |
| barite | 4.2 |
| alumina trihydrate | 2.4 |
| feldspar | 2.8 |

The high-density fillers suitable for use in the present invention are preferably used as powders with an average particle size of between 2 and 600 µm, more preferably of between 2. and 100 µm and especially preferably of between 2 and 50 µm. The preferred high-density fillers listed above are widely available. Especially suitable high-density fillers are available from Norwegian Talc GmbH as Microdol 1 or Myanit.

It is essential in the present invention that both low-density filler or fillers and high-density filler or fillers are employed. If the low-density fillers are omitted, the polyol part A tends to form non-redispersible precipitates. If the high-density filler or fillers are omitted, the polyol part A tends to become non-pourable and dry, in particular, for high filler loadings and/or the low-density fillers tend to float. It is also essential that the low-density filler or fillers have a density of about 0.8 g/cm³ or less whereas the high-density fillers have a density of about 2 g/cm³ or more. It was found, for example, that the stability of polyol parts A comprising hollow glass microspheres and polymer granulate with a density of, for example, between 0.9 and 1.5 g/cm³, does not meet all practical requirements.

The polyol part A of the precursor of the present invention comprises between 10-50 wt.% of one or more low-density fillers. If the amount of the low-density fillers is selected to be smaller than about 10 wt.%, the density of the polyol part A tends to become too high. This is disadvantageous because the high transportation weight makes the material less convenient to handle and to transport. It was also observed that the polyol part A tends to exhibit liquid-liquid phase separation if the amount of the low-density filler is less than about 10 wt. %. If the amount of the low-density filler is selected to be higher than about 50 wt.%, the viscosity of the polyol part A tends to become too high. This is disadvantageous because the precursor of the polyurethane resin which is obtainable by combining polyol part A and polyisocyanate part B, must be, for example, easily pourable into the mold body when preparing an electrical cable joint. The viscosity of the polyol part A preferably is not more than 15,000 mPas and especially preferably 10,000 mPas or less. The polyol part A of the precursor of the present invention preferably comprises between 15-45 wt.%, more preferably between 20-40 wt.% and especially preferably between 20-30 wt.% of one or more low-density fillers.

The polyol part A of the precursor of the present invention furthermore comprises between 10-50 wt % of one or more high density fillers. If the amount of high-density filler or fillers is selected to be higher than about 50 wt.%, the density and viscosity of the polyol part A and the precursor tends to be too high If the concentration of the high-density filler or fillers is less than about 10 wt.% and/or the mass ratio between the low-density filler or fillers and the high density filler or fillers is about 3 or more the polyol part A tends to exhibit liquid-liquid phase separation and the low-density filler or fillers tend to float. The amount of high-density filler or fillers of the polyol part A of the precursor of the present invention preferably is between 15-45 wt.%, more preferably between 20-40 wt.% and especially preferably between 20-30 wt.%.

The sum of the amounts of the low-density filler or fillers and of the high-density filler or fillers in the polyol part A of the precursor of the present invention preferably is between 20-60 wt.%, more preferably between 30-60 wt.% and especially preferably between 35-60 wt.%. If the combined amount of the low-density filler or fillers and the high-density filler or fillers is higher than about 60 wt.%, the amount of the liquid phase is too low to provide sufficient wetting of the fillers which distinctly deteriorates the mechanical and electrical properties of the cured polyurethane resin. If such combined amounts on the other hand are less than about 20 wt.%, the flowing characteristics of the precursor such as, for example, its ability to fill small voids is reduced.

The relative amount of the low-density filler or fillers and of the high-density filler or fillers are selected and adjusted so as to provide a stable polyol part A with the meaning of stable being defined above. The present inventors found that the mass ratio of the amounts of low-density filler or fillers and the high-density filler or fillers preferably is between 0.33 and 3, more preferably between 0.5 and 2 and especially preferably between 0.7 and 1.8

The polyol part A of the precursor of the present invention may comprise additional components such as, for example, dehydrating agents. These include, for example, molecular sieves such as, for example, crystalline silicate or aluminosilicate framework structures of the zeolite type. Other molecular sieves are based on silicate frameworks where boron, gallium and/or iron replace aluminum. Still other classes of molecular sieves are materials where germanium replaces silicon in the aluminosilicate framework. Molecular sieves which have been found to be useful in the present invention include, but are not limited to, 13 Ångstrom molecular sieves, available as BAYLITH W from Bayer (Leverkusen, Germany), Type 4 Ångstrom molecular sieves, available from Union Carbide, 3 Ångstrom molecular sieves, available as BAYLITH L from Bayer (Leverkusen, Germany) and hydrophilic deodorizing molecular sieves, available as SMELLRITE 5000 from Universal Oil Products. Particularly preferred are molecular sieves having a pore size of about between 3 and 10 Ångstroms, such as Baylith L.

Dehydrating agents are preferably present in the polyol part A of the precursor of the present invention in an amount of between 0-10 wt.% and more preferably of between 0-8 wt.%.

The polyol part A of the precursor of the present invention may also comprise suspending agents in order to further increase its stability. Useful suspending agents may be selected from a group consisting of amorphous fumed silica, aluminum octoate, Alumagel™ diatomateous earth, metal soaps, the magnesium salts of stearic acid, the aluminum salts of stearic acid and powdered polyvinyl chloride. Especially preferred are Cab-O-Sil™ M-5, an amorphous fumed silica from the Cabot Corp., aluminum octoate, Alumagel™ from the Witco Chemical Corp., Infusorial Earth™, a diatomateous earth available from Fisher Scientific Company, metal soaps such as the calcium salt of lauric acid commercially available from Pfaltz & Bauer, Inc., magnesium or aluminum salts of stearic acid available from Fisher Scientific Co. and powdered polyvinyl chloride commercially available from B.F. Goodrich Co. Especially preferred is the Thixcin paste which may be prepared as described in Example 4 below. Suspending agents are preferably present in the polyol part A in an amount of between 0-7.5 wt.% and more preferably of between 0-5 wt.%. The amount of suspending agents, if present, is preferably 3 wt.% or less and more preferably 2 wt.% or less because suspending agents often are thixotropic and tend to increase the viscosity of the polyol part A.

The polyol part A of the precursor of the present invention may also comprise viscosity-reducing extenders such as high boiling solvents like, for example, butyldiglycolacetate in the range of 0 to 10 wt.%, preferably of 1 to 6 wt.%.

The polyol part A of the precursor of the present invention may also comprise further additives such as catalysts for the polyurethane reaction, flame retardants, plasticizers, dyes, pigments, mold release agents, antioxidants and/or fungicides. Catalysts which are useful in the present invention are, for example, tertiary amines such as triethylamine and triethylenediamine and organometallic compounds such as zinc octoate and dibutyl tin dilaurate. Plasticizers useful in the present invention include, for example, dioctyl phthalate, polypropylene glycol, chlorinated paraffin, liquid polybutadiene and the like.

The amount of such further additives to the polyol part A preferably is between 0-15 wt.% and more preferably between 0-10 wt.%.

An especially preferred composition of the polyol part A is given below:
- 30 - 40 wt.%: of one or more polyhydroxyl compounds at least 85 wt.% of such compounds being hydrophobic polyhydroxyl compound(s)
- 20 - 30 wt.%: of one or more hollow glass microspheres
- 20 - 30 wt.%: of one or more high-density fillers

This especially preferred composition may optionally comprise one or more additives in a concentration of 10 wt.% or less and more preferably of 5 wt.% or less. The polyhydroxyl compounds preferably comprise caster oil in a concentration of 25 wt.% or more with respect to the mass of the polyol part A.

The precursor of the present invention also has a polyisocyanate part B which preferably comprises 1-5 and more preferably 1-3 polyisocyanate compounds selected from a group consisting of 1,4-butylene diisocyanate, 1,6-hexamethylene diisocyanate, cyclopentylene-1,3-diisocyanate, 4,4'-dicyclohexylmethane diisocyanate, isophorone diisocyanate, cyclohexylene-1,4-diisocyanate, 2,4-tolylene diisocyanate, 2,6-tolylene diisocyanate, diphenylmethane diisocyanate (MDI), 2,2-diphenylpropane-4,4'-diisocyanate, p-phenylene diisocyanate, m-phenylene diisocyanate, xylene diisocyanate, 1,4-naphthylene diisocyanate, 1,5-naphthylene diisocyanate 4,4'-diphenyl diisocyanate, azobenzene-4,4'-diisocyanate, m-or p-tetramethylxylene diisocyanate, 1-chlorobenzene-2,4-diisocyanante, diphenylmethane diisocyanate modified with carbodiimide, diphenylsulphone diisocyanante, 3,3'-diisocyanante dipropyl ether, triphenylmethane triisocyanate and isophorone diisocyanante. Isocyanate terminated prepolymers obtained from the above mentioned polyisocyanate compounds can also be used.

The amount of the one or more polyisocyanate compounds is preferably chosen such that the overall ratio of isocyanate groups to hydroxyl groups is between about 0.8:1 to 1.1:1, more preferably between 0.9:1 and 1.1:1 and especially preferably between 0.98:1 and 1.07:1.

The polyisocyanate component B may comprise further inert additives such as, for example, flame retardants, plasticizers, dyes or pigments. Any further additives, if present, need to be essentially dry, i.e., free of water, and essentially free of hydroxyl groups in order to avoid premature curing of the polyisocyanate part B. The concentration of further additives, if present, preferably is not more than 20 wt.% with respect to the mass of the polyisocyanate part B, preferably not more than 15 wt.% and especially preferably 10 wt.% or less

The polyhydroxyl compounds, polyisocyanate compounds and the optional additives listed above are intended to be illustrative, and the precursor of the present invention can comprise other compounds if desired.

The polyol part A and the polyisocyanate part B of the precursor of the present invention are stored separately using, for example, two cans or a two portion bag as is described in EP 0,587,003 or other two portion bag constructions. The two parts A and B are then thoroughly mixed, for example, by manual kneading or by using an automatic mixing and dosing equipment, and the resulting precursor is poured, for example, into the mold body or applied as a coating to a substrate if desired. The polyurethane curing reaction can occur, for example, at room temperature, however, heating may optionally be employed.

In a less preferred embodiment the uncured precursor of the present invention may comprise a first part I comprising one or more polyhydroxyl compounds, a second part II comprising the low-density filler component and the high-density filler component, and a third part III comprising one or more polyisocyanate compounds. The composition of the polyhydroxyl component of part I and the amounts of part I and part II and their respective components with respect to the mass of the sum of part I and part II are as indicated above. If desired, the three parts I, II and III may comprise further additives as indicated. The polyurethane resin is obtained by mixing parts I, II and III with subsequent curing. This alternative method is, however, less preferred because it is less user-friendly and because it is difficult to mix the three parts and, in particular, disperse the filler part II in the other two parts I and III on the spot so that the filler component is fully wetted out.

It was found that the precursor of the present invention and the resulting polyurethane resin are especially suited for electrical insulation applications. The polyurethane resins exhibit, in particular, advantageous dielectrical loss factors tan delta (δ), in particular, at elevated temperatures.

The precursor and the polyurethane resin, respectively, according to the present invention are particularly suitable for the preparation of electrical cable joints for low voltage applications of up to about 1 kV. The precursor and the polyurethane resin, respectively, of the present invention are also especially suited for potting and encapsulating of electrical and/or electronical devices.

The following examples are intended to illustrate the invention further. First, however, certain procedures and tests utilized in the examples, will be described. Above and below, parts are given as parts by weight (pbw).

### Test Methods

### Viscosity

Viscosity of polyol part A of the precursor as well as the viscosity of the uncured precursor (= combination of polyol part A and polyisocyanate part B immediately after thorough mixing) was measured by cone and plate geometry using a Model CV 20 N Viscosimeter manufactured by Haake (Karlsruhe, Germany) with a PK 45-4 deg cone.

Results were recorded in units of 10⁻³ Pascal seconds (mPas).

### Dielectric Loss Factor (tan δ)

Dielectric properties of the cured polyurethane resins was measured using a modified version of the standard test method VDE 0303 (Part 4/12.69). Instead of using a Schering bridge as described by the method, measurements were made using a CAPAMAT Model 2700 Loss Factor Measurement System (Burster Praezisionsmesstechnik, Gernsbach Germany). The CAPAMAT 2700 was used in conjunction with a solid sample test cell Model 2914, available commercially from TETTEX, Zurich, Switzerland. This equipment has the advantage that the sample and comparison material are not connected in series with a Schering bridge, but rather that each has its own circuit. The loss factor (tan δ) at 50°C was measured

Samples were in form of 1 mm thick sheet of sufficient dimension to cover the electrode surface. Resin samples were cured at 23 °C for 24 h, followed by 24 h at 80 ° C before dielectric measurements were made.

### Water Absorption

A sample of a cured polyurethane resin disc having the dimensions of 50 ±1mm diameter and 3 ±0.2 mm thickness was weighed and then immersed in water having a temperature of 50° C for 42 days. The sample was then dried and reweighed. The amount of water absorption was measured by difference and is recorded in mg.

### Stability of Polyol Part A

The stability of polyol part A of the resin was qualitatively determined by an accelerated aging test.

A 30 g portion of polyol part A was placed in a test tube measuring 17 cm in height and having a diameter of 2 cm. The test tube was placed in a forced air oven at 50°C for 4 days.

The samples were removed from the oven and allowed to cool to 23 °C. The appearance of the mixture was then evaluated in three respects:
1. formation of precipitate (x = essentially no precipitate, or precipitate easily redispersible, i.e., when gently pushing a small glass rod (diameter 3 mm) once into the precipitate, such glass rod touches the bottom of the test tube, 0 = formation of precipitate which is non-redispersible according the above test),
2. overall appearance (x = essentially no liquid-liquid phase separation, 0 = liquid-liquid phase separation)
3. floating (x = essentially no floating, 0 = floating).

### Examples

### Example 1

Polyol part A of a two part precursor was prepared by combining 35.0 wt.% of a hydrophobic polyesterpolyol based on castor oil (available as Castor Oil DRO 1F from OLEO Chemie Gesellschaft mbH, Hamburg) with 10.0 wt.% of 3 Å (Angstrom) molecular sieves (potassium aluminosilicate, available as a paste in castor oil as Baylith L Paste from Bayer, Leverkusen) and 25.0 wt.% of dolomite mineral filler CaMg(CO₃)₂ (density 2.85 g/cm³, powder, average particle size of 5-10 µm, available as Microdol 1 from Norwegian Talc). This mixture was dispersed for 10 minutes with a high speed homogenizer (available from Cowls Dissolver Co., Cayuga, New York) at approximately 4,000 rpm until the filler was homogeneously dispersed in the polyol.

Then the mixture was degassed thoroughly in a vacuum line for approximately 5 minutes or until no more bubbles were observed to rise to the surface of the mixture.

5.0 wt.% of butyldiglycolacetate (available from BP - Chemicals) was then added as viscosity-reducing extender, as well as 25.0 wt.% of hollow glass microspheres (density 0.7 g/cm³, average size of microspheres 120 µm, available as Extendospheres SG from Lubrizol, Langer & Co., Ritterhude, Germany) and 0.006 wt.% of dibutyltindilaurate (available from Bärlocher GmbH). The resulting mixture was homogenized using an ordinary stirring device at a low revolution rate of 500 rpm. Polyol part A thus formed had a viscosity of 6,990 mPa and a density of 1.04 g/cm³.

Polyisocyanate part B consisted of diphenylmethanediisocyanate (MDI) (available as Baymidur K 88 hv from Bayer AG, Leverkusen).

100 pbw by weight of polyol part A and 17 pbw by weight of polyisocyanate part B were combined and stirred to form a uniform mixture. The relative amounts of parts A and B were calculated based on an equivalent weight of isocyanate groups in part B as compared to the equivalent weight of available hydroxyl groups in part A to establish a ratio of isocyanate to free hydroxyl groups of approximately 1:1. Chemical compositions and physical properties of the resin are summarized in Table 1.

A small cast sample was prepared for evaluation of electrical properties and allowed to cure at 23° C for 24 hours.

A low voltage inline splice was prepared. Four separate wires having a cross section of 150 mm² were spliced using standard methods. The splice was then covered with a large two-part polymeric mold body having a length of approximately 500 mm and a circumference at its largest part of about 350 mm (industry standard A5).

Approximately 3 kg of the uncured precursor consisting of a mixture of parts A and B was poured into a two-part mold comprising the splice and allowed to cure at 23° C for 24 hours. The splice was inspected visually for voids or bubbles and for uniform consistency. The cured resin mass was found to be homogeneous and free of inclusions. The splice furthermore passed the test according to VDE 0278 part 623 (harmonization document HD 623 S1).

### Comparative Example 1

Example 1 was repeated with the exception that hollow glass microspheres were omitted and replaced by dolomite mineral filler so that the total amount of dolomite in polyol part A was 50 wt.%.

Part A was not sufficiently stable. Visual inspection of part A after 3 days at 50° C hours according to the stability test described above showed formation of a precipitate of mineral filler which was not redispersible using the method described above. Viscosity and density of part A were measured as 1,670 mPas and 1.491 g/cm³, respectively.

### Comparative Example 2

Example 1 was repeated with the exception that the dolomite mineral filler was omitted and replaced by hollow glass microspheres so that the total amount of hollow glass microspheres in the polyol part A was 50 wt.%. Polyol part A was a highly viscous, unpourable dry paste.

No precursor or polyurethane resin was formulated or evaluated.

### Example 2

Example 1 was repeated, with the exception that the relative amounts of dolomite mineral filler and hollow glass microspheres was altered. Dolomite mineral filler was added in the amount of 10 wt.% and hollow glass microspheres in the amount of 40 wt.%. Viscosity of part A was 69,240 mPa and the density was 0.87 g/cm³.

After part A was stored at 50° C for 3 days, some floating of the glass microspheres was observed whereas no precipitate was formed.

100 pbw of polyol part A was used with 17 pbw of polyisocyanate part B to form a pourable precursor.

### Example 3

Example 1 was repeated, with the exception that 40 wt.% dolomite mineral filler and 10 wt.% hollow glass microbubbles were employed. The viscosity of polyol part A was 5,030 mPa and the density was 1.27 g/cm³. After part A was stored at 50° C for three days, some precipitate was formed which could, however, be easily redispersed using the method described in the stability test section above.

100 pbw of polyol part A was used with 17 pbw of polyisocyanate part B to form a pourable precursor.

### Example 4

A polyol part A was prepared according to Example 1, using in the amounts shown the following compounds already described in Example 1:

31 wt.% of hydrophobic polyol (Castor Oil DRO 1F from OLEO Chemie Gesellschaft mbH, Hamburg), 10.0 wt.% of 3 Å (Angstrom) molecular sieve, 23 wt.% of dolomite mineral filler, 25.6 wt.% of hollow glass microspheres, 5.4 wt.% of butyldiglycolacetate and 0.005 wt.% of dibutyl tin dilaurate and additionally,

4.1 wt.% of Thixcin Paste, available as THIXCIN R powder, which is pasted (5 %) in dipropyleneglycol (95%), to further aid in prevention of settling. Carbon black paste (Russpaste LV 925 from Langer, Ritterhude Germany) was also added in the amount of 0.85 wt.%. The viscosity, density and settling behavior of polyol part A were evaluated.

Polyol part B (25 pbw) was then added to part A (100 pbw). The viscosity of the uncured precursor was measured and then the resin was allowed to cure for 24 h at 23°C. Loss factor and water absorption were evaluated according to the test methods given above.

### Comparative Example 3

A polyol part A was prepared using 34.5 wt.% of a hydrophilic polyetherpolyol consisting of a 1:1 mixture by weight of a first hydrophilic polyetherpolyol (OH-number 375, available as Baygal K55 from Bayer AG, Leverkusen) and a second polyetherpolyol (OH-number 56, available as Baygal K340 from Bayer AG, Leverkusen), 20.1 wt.% of dolomite mineral filler, 30 wt.% of hollow glass microspheres, 7.5 wt.% of butyldiglycolacetate, 3.2 wt.% of 3Å molecular sieve, 4.0 wt.% of Thixcin paste, 0.7 wt.% of a catalyst tris (2,4,6-dimethylaminomethylphenol), available as Euredur 13 from Company Witco GmbH, Bergkamen and 0.02 wt.% of antifoaming agent methylpolysiloxane available as Antischaummittel SH from WACKER Chemie, Burghausen. A small resin sample was cast and cured. Loss factor and water absorption were evaluated according to the test methods given above. The dolomite mineral filler, the hollow glass microspheres, butyldiglycolacetate and the molecular sieve used are identified in Example 1.

### Comparative Example 4

A polyol part A was prepared using:

35 wt.% of a 1:1 mixture by weight of a first polyetherpolyol (OH-number 375, available as Baygal K55 from Bayer AG, Leverkusen) and a second polyetherpolyol (OH-number 56, available as Baygal K340 from Bayer AG, Leverkusen), 10 wt.% of dolomite mineral filler, 40 wt.% of hollow glass microspheres, 5 wt.% of dibutyldiglycolacetate and 0.005 wt.% of dibutyltindilaurate. 100 parts by weight of polyol part A was used with 20 parts by weight of polyisocyanate part B consisting solely of MDI to form a curable precursor. The dolomite mineral filler, the hollow glass microspheres, butyldiglycolacetate and the molecular sieve used are identified in Example 1.

### Comparative Examples 5 and 6

Comparative examples 5 and 6 were performed similarly to Comparative Example 4, with the exception that the ratio of the two fillers was altered. The total weight of the two fillers remained constant throughout Comparative Examples 4-6 (50 wt.% of filler compared to 35 wt.% of polyol). Comparative Examples 5 and 6 employed 10 wt.% of dolomite mineral filler with 40 wt.% of hollow glass microspheres and 40 wt.% of dolomite mineral filler with 10 wt.% of hollow glass microspheres, respectively, as summarized in Table 1.

None of the Comparative Examples 6-8 showed sufficient stability of polyol part A.

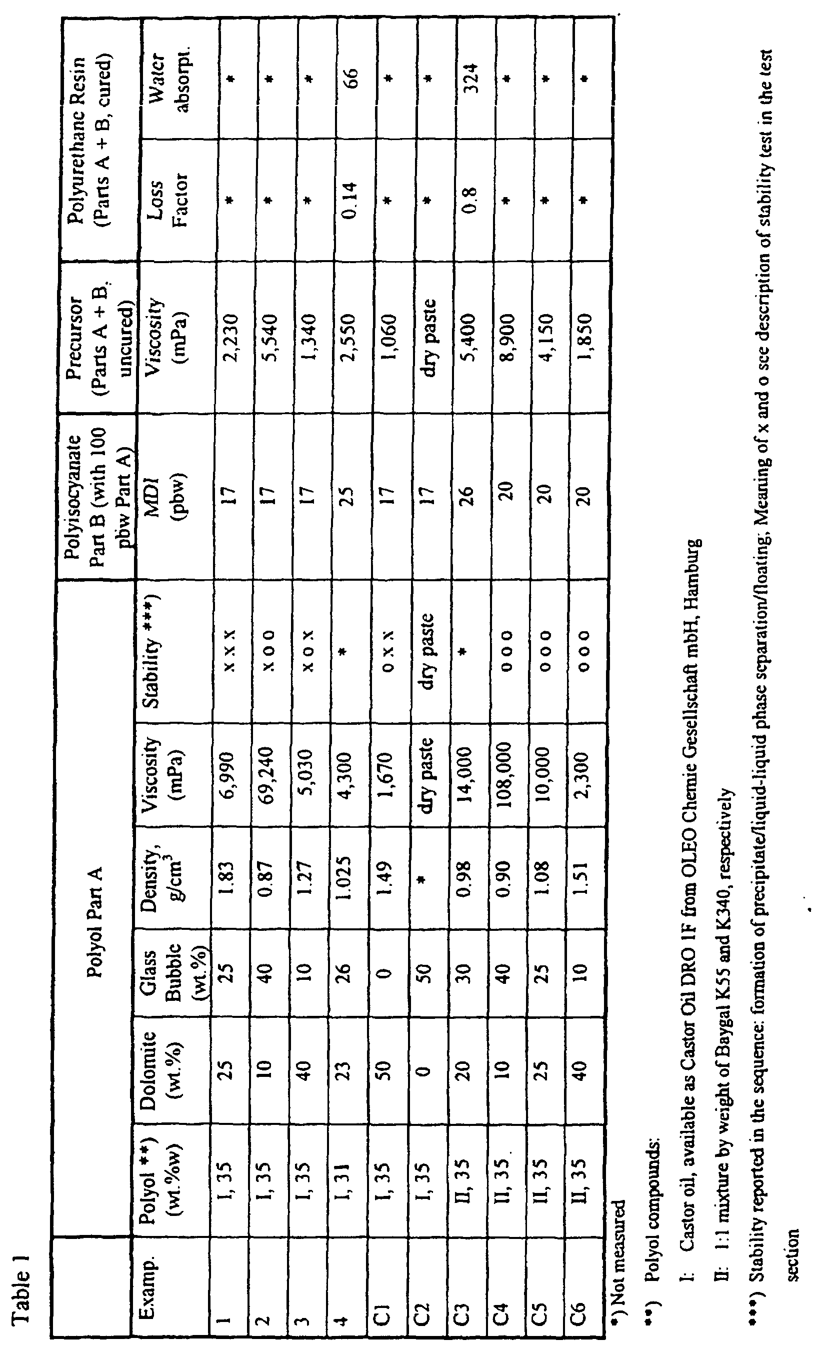

## Claims

1. Polyurethane resin which is obtainable by reacting a first polyol part A and a second polyisocyanate part B, said polyol part A comprising 25-70 wt.% of one or more polyhydroxyl compounds at least 50 wt.% of said polyhydroxyl compounds being one or more hydrophobic polyhydroxyl compounds, 10-50 wt.% of one or more low-density fillers having a density of less than about 0.8 g/cm³, 10-50 wt.% of one or more high-density fillers having a density of 2 g/cm³ or more whereby the sum of the amounts of the low-density fillers and the high-density fillers is between 20-60 wt.%, 0-10 wt.% of a suspending agent, 0-10 wt.% of a dehydrating agent wherein the percentages given refer to the mass of part A and the total mass of part A corresponds to 100 wt.%, and said part B comprising one or more polyisocyanate compounds.

2. Polyurethane resin according to claim 1 wherein the hydrophobic polyhydroxyl compounds are selected from a group consisting of polyester polyhydroxyl compounds and novolak resin compounds.

3. Polyurethane resin according to any of claims 1 or 2 wherein the low-density filler or fillers are selected from a group consisting of hollow inorganic silica or silicate based microspheres and hollow organic microspheres.

4. Polyurethane resin according to any of claims 1-3 wherein the high-density filler or fillers are selected from a group consisting of metal oxides, metal carbonates, silicon dioxide and silicates.

5. Polyurethane resin according to any of claims 1-4 wherein the ratio of the mass of the low density filler component over the mass of the high-density filler component is between 0.33 and 3.

6. Polyurethane resin according to any of claims 1-5 wherein the overall ratio of isocyanate groups to hydroxyl groups is between about 1.1:1 and 0.8: 1.

7. Uncured precursor of a polyurethane resin according to any of claims 1-6 comprising a mixture of part A and part B.

8. Electrical cable joint comprising a mold body and an electrical splice, wherein parts A and B of the precursor of claim 7 are mixed, filled into the mold and cured.

9. Use of the polyurethane resin according to any of claims 1-6 or its uncured precursor according to claim 7, respectively, for molding electrical cable connectors or joints, or for potting and encapsulation of electrical and/or electronical devices.

## Patentansprüche

1. Polyurethanharz, das durch Umsetzung eines ersten Polyolteils A und eines zweiten Polyisocyanatteils B erhältlich ist, wobei der Polyolteil A 25-70 Gew.-% einer oder mehrerer Polyhydroxylverbindungen, wobei es sich bei mindestens 50 Gew.-% der Polyhydroxylverbindungen um eine oder mehrere hydrophobe Polyhydroxylverbindungen handelt, 10-50 Gew.-% eines oder mehrerer Füllstoffe niederer Dichte mit einer Dichte von weniger als 0,8 g/cm³, 10-50 Gew.-% eines oder mehrerer Füllstoffe hoher Dichte mit einer Dichte von 2 g/cm³ oder mehr, wobei die Summe der Mengen von Füllstoffen niederer Dichte und Füllstoffen hoher Dichte zwischen 20-60 Gew.-% liegt, 0-10 Gew.-% eines Suspendiermittels und 0-10 Gew.-% eines Dehydratisierungsmittels enthält, wobei die Prozentangaben sich auf die Masse von Teil A beziehen und die Gesamtmasse von A 100 Gew.-% entspricht, und der Teil B eine oder mehrere Polyisocyanatverbindungen enthält.

2. Polyurethanharz nach Anspruch 1, bei dem die hydrophoben Polyhydroxylverbindungen aus der Gruppe bestehend aus Polyester-Polyhydroxylverbindungen und Novolakharzverbindungen stammen.

3. Polyurethanharz nach Anspruch 1 oder 2, bei dem der oder die Füllstoffe niederer Dichte aus der Gruppe bestehend aus anorganischen Mikrohohlkugeln auf Basis von Siliciumdioxid oder Silicat und organischen Mikrohohlkugeln stammen.

4. Polyurethanharz nach einem der Ansprüche 1-3, bei dem der oder die Füllstoffe hoher Dichte aus der Gruppe bestehend aus Metalloxiden, Metallcarbonaten, Siliciumdioxid und Silicaten stammen.

5. Polyurethanharz nach einem der Ansprüche 1-4, bei dem das Verhältnis der Masse der Füllstoffkomponente niederer Dichte zur Masse der Füllstoffkomponente hoher Dichte zwischen 0,33 und 3 liegt.

6. Polyurethanharz nach einem der Ansprüche 1-5, bei dem das Gesamtverhältnis von Isocyanatgruppen zu Hydroxylgruppen zwischen etwa 1,1:1 und 0,8:1 liegt.

7. Ungehärteter Vorläufer eines Polyurethanharzes nach einem der Ansprüche 1-6, enthaltend eine Mischung von Teil A und Teil B.

8. Elektrokabelverbindung mit einem Formkörper und einem elektrischen Spleiß, bei der die Teile A und B des Vorläufers nach Anspruch 7 vermischt, in die Form gefüllt und gehärtet werden.

9. Verwendung des Polyurethanharzes nach einem der Ansprüche 1-6 bzw. des ungehärteten Vorläufers davon nach Anspruch 7 zum Formen von Elektrokabelverbindern oder -verbindungen oder zum Einbetten und Verkapseln von elektrischen und/oder elektronischen Bauteilen.

## Revendications

1. Résine de polyuréthane qui peut être obtenue par réaction d'un premier composant polyol A et d'un second composant polyisocyanate B, ledit composant polyol A comprenant 25-70% en poids d'un ou plusieurs composés polyhydroxylés, au moins 50% en poids desdits composés polyhydroxylés étant un ou plusieurs composés polyhydroxylés hydrophobes, 10-50% en poids d'une ou plusieurs charges de basse densité, ayant une densité inférieure à environ 0,8 g/cm³, 10-50% en poids d'une ou plusieurs charges de haute densité, ayant une densité d'au moins 2 g/cm³, la somme des quantités des charges de basse densité et des charges de haute densité étant comprise entre 20-60% en poids, 0-10% en poids d'un agent de mise en suspension, 0-10% en poids d'un agent déshydratant, les pourcentages donnés se référant à la masse du composant A et la masse totale du composant A correspondant à 100%, et ledit composant B comprenant un ou plusieurs composés polyisocyanate.

2. Résine de polyuréthane selon la revendication 1 dans laquelle les composés polyhydroxylés hydrophobes sont choisis dans un groupe constitué par les composés polyhydroxylés polyester et les composés résine novolaque.

3. Résine de polyuréthane selon l'une quelconque des revendications 1 ou 2 dans laquelle la ou les charges de basse densité sont choisies dans un groupe constitué par les microsphères minérales creuses de silice ou de silicate et les microsphères organiques creuses.

4. Résine de polyuréthane selon l'une quelconque des revendications 1-3 dans laquelle la ou les charges de haute densité sont choisies dans un groupe constitué par les oxydes métalliques, les carbonates métalliques, le dioxyde de silicium et les silicates.

5. Résine de polyuréthane selon l'une quelconque des revendications 1-4 dans laquelle le rapport entre la masse du composant charge de basse densité et la masse du composant charge de haute densité est compris entre 0,33 et 3.

6. Résine de polyuréthane selon l'une quelconque des revendications 1-5 dans laquelle le rapport global entre les groupes isocyanate et les groupes hydroxyle est compris entre environ 1,1:1 et 0,8:1.

7. Précurseur non durci d'une résine de polyuréthane selon l'une quelconque des revendications 1-6 comprenant un mélange du composant A et du composant B.

8. Joint de câble électrique comprenant un corps de moule et une épissure électrique, dans lequel les composants A et B du précurseur de la revendication 7 sont mélangés, introduits dans le moule et durcis.

9. Utilisation de la résine de polyuréthane selon l'une quelconque des revendications 1-6 ou de son précurseur non durci selon la revendication 7, respectivement, pour mouler des raccords ou des joints de câbles électriques, ou pour enrober ou encapsuler des dispositifs électriques et/ou électroniques.
